(19) Europäisches Patentamt
European Patent Office
Office européen des brevets

(11) EP 0 891 991 A2

(12) **EUROPEAN PATENT APPLICATION**

(43) Date of publication:
**20.01.1999 Bulletin 1999/03**

(51) Int Cl.[6]: **C08F 10/00**, C08F 4/64, C09J 123/12, C08L 23/10

(21) Application number: **98118324.7**

(22) Date of filing: **19.01.1996**

(84) Designated Contracting States:
**DE FR GB IT NL**

(30) Priority: **01.03.1995 US 396966**

(62) Document number(s) of the earlier application(s) in accordance with Art. 76 EPC:
**96902730.9 / 0 812 335**

(71) Applicant: **MINNESOTA MINING AND MANUFACTURING COMPANY**
**St. Paul, Minnesota 55133-3427 (US)**

(72) Inventor: **The designation of the inventor has not yet been filed**

(74) Representative: **VOSSIUS & PARTNER**
**Siebertstrasse 4**
**81675 München (DE)**

Remarks:
This application was filed on 28 - 09 - 1998 as a divisional application to the application mentioned under INID code 62.

(54) **Tris(pentafluorophenyl)borate complexes and catalysts derived therefrom**

(57) Tris(pentafluorophenyl)borane complexes having the general formula $(C_6F_5)_3Bx(YXH)_q$ wherein X is oxygen, or sulfur; q is 1 to 3; Y is a hydrogen atom, $R^1$-, $(R^2)_3Si$, or $(R^3)_2C$=N-; $R^1$ is a hydrocarbyl group containing 1 to 500 carbon atoms, and may contain a divalent oxygen and further may be a fluorine-containing hydrocarbyl group; $R^2$ is independently a linear or branched alkyl group containing 1 to 25 carbon atoms, or a phenyl group, further $R^2$ may contain a SiO- group; and $R^3$ is independently a hydrocarbyl group containing 1 to 25 carbon atoms; $R^3$ may be a hydrogen atom provided both $R^3$ groups selected are not hydrogen atoms; and to complexes containing the borane complexes with an organometallic compound, either as a neutral compound or as an acidic salt that are useful as catalysts for polymerization and copolymerization of olefins and to polymeric products prepared using these catalysts.



Printed by Jouve, 75001 PARIS (FR)

## Description

### Field of the Invention

This invention relates to complex compounds of tris(pentafluorophenyl)borane and to mixtures containing the borane complexes and an organometallic complex that are useful as catalysts for polymerization and copolymerization of olefins and to polymeric products prepared using these catalysts.

### Background of the Invention

Use of soluble Ziegler-Natta type catalyst systems in the polymerization of olefins, in particular polymerization of ethylene to polyethylene is known in the art. In general, traditional Ziegler-Natta type systems comprise a transition metal halide activated to form a catalyst species by reaction with a metal alkyl cocatalyst, particularly aluminum alkyl cocatalysts. However, aluminum alkyl cocatalysts are often used in large excess, see U.S. Patent No. 4,404,344. This is disadvantageous because the aluminum compounds must be removed from the resultant polymers. These traditional Ziegler-Natta catalysts often contain a variety of different active sites, each of which has its own rate of initiation, propagation, and termination. As a consequence of this non-uniformity of active sites, the linear polyethylene has a broad molecular weight distribution. See for example, *Comprehensive Organometallic Chemistry;* Wilkinson, G., Ed.; Pergamon Press: Oxford, **1982**; Vol. 3, Chapter 22.5, p 475; *Transition Metals and Organometallics as Catalysts for Olefin Polymerization;* Kaminsky, W. and Sinn, H., Eds.; Springer-Verlag: New York, **1988**, and *Transition Metal Catalyzed Polymenrations: Alkenes and Dienes;* Quirk, R.P., Ed.; Harwood: New York **1983**.

Recently, catalysts have been reported that rely on boron rather than on aluminum-containing compounds. Boron-based catalysts, in contrast, to the aluminum-based catalysts are often stoichiometric in boron. That is, they contain one mole of boron-containing component per mole of transition metal. Furthermore, it is usually unnecessary to remove the small amount of boron from the polymer, unlike the aluminum-based catalysts, mentioned above.

Tris(pentafluorophenyl)borane $(C_6F_5)_3B$ forms 1:1 complexes with Lewis bases such as ether, amines, and phosphines. The compound is hygroscopic and, presumably forms a monohydrate but neither the composition, that is stoichiometry of this hydrate nor its properties have been disclosed. No uses for these donor-acceptor complexes have been taught, *see* Massey et al. *J. Organomet. Chem.* **1964**, 2, 245. Hygroscopic $(C6F_5)_3B\text{-}Et_2O$ was reported by Pohlman et al. Z *Nat.* **1965,** *20b, 5.*

Hlatky et al. *J. Am. Chem. Soc.* **1989,** 111, 2728 described zwitterionic catalysts such as $(Me_5Cp)_2Zr[(m\text{-}C_6H_4)BPh_3]$. EPO 0 277 004 describes catalysts prepared by reacting, $(Me_5Cp)_2ZrMe_2$ with $B_9C_2H_{13}$, $[Bu_3NH][(B_9C_2H_{11})_2Co]$ or $[Bu_3NH][B_9C_2H_{12}]$.

Similarly, EPO 0 418044 describes monocyclopentadienyl complex catalysts containing a non-coordinating, compatible anion such as $(C_6F_5)_4B^-$. More recently, homogeneous catalysts exemplified by $[Cp_2ZrMe][MeB(C_6F_5)_3]$ have been synthesized from the reaction of $Cp_2ZrMe_2$ and $(C_6F_5)_3B$ see X. Yang et al. *J. Am. Chem. Soc.* **1991**, 113, 3623.

Furthermore, the above described catalysts are sparingly soluble in toluene. The catalysts are even less soluble in normally liquid $\alpha$-olefins such as 1-hexene or in mixtures of such olefins and non-reactive solvents, such as hexane, toluene or xylene. These catalysts generally separate as oils from toluene or toluene-hexane mixtures. Even though catalysis still proceeds, phase separation is undesirable for several reasons, for example contact between monomer and catalyst is les lefficient when the catalyst is only partially soluble. When the catalyst is incompletely soluble, catalyzed polymerization typically takes place at different rates either in solution or at the solid-liquid interface, thus tending to lead to a broad distribution of polymer molecular weights. Furthermore, catalyst:monomer ratio in solution is generally difficult to control when the catalyst is only partially soluble.

It is further known that a soluble or molecularly dispersed catalyst typically permits more ready access of the substrate to the active sites. As a result, more efficient use of the catalyst is possible. It is also recognized that the molecular weight of a polymer is proportional to the concentration of monomer in the reaction mixture in which it is synthesized. Generally, high molecular weight is desirable in applications such as glues and adhesives, as well as in the construction of rigid objects such as gaskets, insulators and packaging materials.

Catalytic polymerization of lower olefins, in particular ethylene and propylene is relatively easy. On the other hand polymerization of longer chain $\alpha$-olefins tends to be slower and the products are often oligomers rather than high polymers, see Skupinska *Chem. Rev.* **1991**, 91, 635. Heterogeneous catalysts such as $TiCl_3/AlEt_3$, which produce higher molecular weight polymers from long-chain $\alpha$-olefins, lead to a broad range of molecular weights (high polydispersity index).

Amorphous atactic polypropylene has been available as a byproduct of the manufacture of crystalline, isotactic polypropylene. The byproduct material has a relatively low molecular weight and is easily separated from crystalline polymer by extraction with organic solvents. Because of low molecular weight, this material lacks the cohesive strength and other desirable mechanical properties that are associated with high molecular weight polypropylene.

With recent improvements in catalyst technology, yields of isotactic polypropylene have increased to the point that relatively little amorphous atactic polypropylene byproduct is now commercially available. Consequently, substitutes for amorphous polypropylene have been developed that generally comprise low molecular weight copolymers of polypropylene with other olefins, such as ethylene or butene. The inclusion of co-monomers tends to disrupt polypropylene crystallinity and produces an amorphous copolymer. Such copolymers are taught in, *e.g.,* U. S. Patent Number 3,634,546 and are commercially available from Hüls AG and Eastman Chemicals.

A process for producing extensively amorphous, low molecular weight homo- and/or copolymers of $\alpha$-olefins of three or more carbon atoms is described in U.S. Patent No. 4,317,897. The heptane-soluble fraction *(i.e.,* amorphous material) as described is greatest when the process is carried out in the presence of hydrogen gas, a method that is known in the art to decrease the molecular weight of alkene polymers *(see,* for instance, U. S. Patent No. 3,051,690). It is further known in the art that increases in molecular weight tend to reduce solubility (see *Polymer Handbook,* 2nd Ed., J. Brandrup and E. H. Immergut, Eds., John Wiley & Sons, New York; p. IV-263). Thus, the described process provides (co)polymers of amorphous character at the expense of molecular weight.

Atactic polypropylene was prepared by Herwig and Kaminsky *(Polymer Bulletin,* **1983**, 9, 464-469), using a catalyst system comprising, for instance, $(cyclopentadienyl)_2Ti(CH_3)_2$ and methylaluminoxane. A $M_n$ = 88,000 is reported for propylene homopolymer, without further characterization.

Canadian Patent Application No. 2,067,525 describes homopolymerization of propylene in which various fluorenyl-containing zirconium or hafnium metallocene catalysts were used. In a number of cases, the resulting polymer mixture contained large amounts of hexane- or xylene-soluble fractions.

U. S. Patent Nos 3,954,697 and 3,923,758 describe the production of low molelcular weight amorphous homo- and co-polymers of propylene, employing a catalyst comprising titanium halides and a trialkyl aluminum species. The copolymers are described as pressure-sensitive adhesives and are applied to a backing by hot-melt coating. The addition of tackifiers to these (co)polymers is described in U. S. Patent No. 4,264,756.

Medium-to-low molecular weight polypropylene waxes are commercially available from the Eastman Chemical Co., under the trade name EPOLENE™ N-15. The polymers are described as having $M_n$ = 5,000, $M_w$ = 12,000, ring-and-ball softening point = 163°C and Brookfield Thermosel viscosity = 600 cp at 190°C. Eastman Chemical Co. also makes amorphous propylene homopolymer available under the trade name EASTOFLEX™ P1023, described as having a ring-and-ball softening point of 150°C and a Brookfield Thermosel viscosity = 2300 cp at 190°C. These polymers are limited in their usefulness due to their low molecular weight.

Atactic polypropylene has been prepared by the hydrogenation of poly(1,3-dimethyl-1-butylene), which was prepared via the anionic homopolymerization of (E)-2-methyl-1,3-pentadiene, as described by Zhongde et al., *Macromolecules,* **1985**, *18*, 2560 - 2566. The polymer is described as "near-monodisperse," *i.e.,* having a polydispersity index approximately equal to 1.0, and clearly does not arise from homopolymerization of propylene monomer.

Homopolymerization of propylene by means ofbis(cyclopentadienyl)-zirconocenes or -titanocenes and methylaluminoxane cocatalysts has been reported to produce atactic polypropylene having an "average molecular weight" ranging from 76,000 to 590,000, depending on the metallic species and other reaction conditions, especially polymerization temperature. See W. Kaminsky, *Angew. Makromol. Chemie,* **145/146** (1986) 149-60. U.S. Patent Nos. 4,404,344 and 4,542,199 (Kaminsky, et al., Hoechst) also describe these polymerizations, although reported molecular weights of the recovered atactic polypropylene are in the range of 5,000.

Japanese Patent (Kokoku) No. Sho 49 [1974] - 5753 describes polymerization of propylene over a $VCl_4$ - $AlEt_3$ catalyst to give a high yield of amorphous polypropylene having a molecular weight of 330,000. Molecular weights ranging from 82,000 to 1,192,000 are reported for amorphous polypropylene thus obtained.

PCT International Publication No. WO 89/03 847 describes a low molecular weight amorphous hexene-propylene copolymeric hot-melt pressure sensitive adhesive, prepared by high-temperature solution copolymerization using $TiCl_4$ supported on $MgCl_2$, a preactivated catalyst comprising $TiCl_3$, and an aluminum alkyl co-catalyst. The copolymer comprises about 40 to 75 weight percent 1-hexene, preferably 55 to 65 weight percent.

European Patent Application No. 232,201 describes the homopolymerization of propylene on $MgCl_2$-supported $TiCl_4$ in the presence of an aluminum alkyl, to give a low molecular weight amorphous polymer having good hot-melt PSA characteristics. Copolymerization with only ethylene is described.

What is needed in the art, and what is provided by the present invention, is amorphous, atactic, polypropylene and copolymers thereof having, simultaneously, high molecular weight, low polydispersity, and useful mechanical properties.

## Summary of the Invention

Briefly, in one aspect of the present invention catalyst precursor complexes are provided comprising tris(pentafluorophenyl)borane, $(C_6F_5)_3B$ and at least one complexing compound such as water, alcohols, mercaptans, silanols, and oximes. These neutral complexes may be converted to acidic salts oftheir conjugate bases by reaction with amines.

The neutral complexes or acidic salts are reacted with Periodic Table Group IVB organometallic compounds to form catalytically active compounds (hereinafter also referred to as catalysts) useful for polymerization of olefin monomers. Advantageously, the catalysts of the present invention are soluble in olefins to the extent of 1 x $10^{-3}$ molar (M) or greater. Catalysts that can function in undiluted monomer, as distinguished from monomer dissolved in inert diluent, are desirable because the catalysts and monomers tend to produce products having higher molecular weight. Additionally, because only low levels of the catalysts are used, removal of catalyst or its components from the final, product polymer is generally not required.

Catalysts of the present invention may be used to prepare polyolefins from olefinically unsaturated monomers having 2 to 30, preferably 5 to 10 carbon atoms. The resulting polymers have a weight average molecular weight of 100,000 to 5,000,000, preferably 500,000 to 3,500,000 and have a polydispersity (PD) of molecular weights $\leq$ 3.5, preferably 1.5 to 3. Polymers prepared from long chain $\alpha$-olefins having high molecular weight and low polydispersity are not previously described. In addition, catalysts of the present invention surprisingly may be used to prepare amorphous, rubbery polypropylene homopolymers and copolymers having weight average molecular weights of from about 100,000 to about 5,000,000, preferably from about 200,000 to 1,000,000. Such atatic polypropylene homopolymers and copolymers have not previously been described.

Suitable olefinically unsaturated monomers that may be polymerized using the catalysts of the present invention include, but are not limited to, linear- and branched $\alpha$-olefins, cyclic olefins, olefins containing an aromatic group such as phenyl, olefins containing silicon and boron, and diolefins. Mixtures of these of monomers, as well as mixtures containing olefins and diolefins may be copolymerized. Preferred unsaturated monomers include linear $\alpha$-olefins having the general formula $C_nH_{2n}$, where n is 3 to 10.

A feature of the present invention is the incorporation of anions of the type $YX\text{-}B(C_6F_5)_3^-$ into novel complex salts of Group IVB transition metals (titanium, zirconium, and hafnium), to produce highly active catalysts capable of polymerizing longer chain poly-$\alpha$-olefins to yield products having very high molecular weights and a narrow polydispersity index. Furthermore, preparation of these salts are described, and such salts can either contain or are essentially free of Lewis bases. An additional feature of this invention is the incorporation of flat carbocyclic ligands into these novel complex salts, to produce olefin polymers of exceptionally high molecular weight. Thus, as shown below using $[(ligand)_2ZrMe][(C_6F_5)_3BOC_{18}H_{37}]$ as the catalyst and 1-hexene as the monomer, polymer molecular weight increases as the ligand is changed in the order of cyclopentadienyl < indenyl << fluorenyl. The fluorenyl ligand is therefore particularly useful when high molecular weight, rubbery polyolefins are desired.

In this application:

"Cp" means a carbocyclic ligand, such as cyclopentadienyl, indenyl or fluorenyl;
"Me" means a methyl group;
"Et" means an ethyl group;
"Bu" means a butyl group;
"Ph" means a phenyl group;
"hydrocarbyl" is used in its usual sense to mean a group containing hydrogen and carbon atoms, such as alkyl, alkenyl, aryl, cycloalkyl, cycloalkenyl, alkaryl, arylalkyl, and the like; and
"Group IVA" and "Group IVB" are the Periodic Table CAS version designations.

**Detailed Description of the Preferred Embodiment(s)**

The compound $(C_6F_5)_3B$, tris(pentafluorophenyl)borane (also referred to as tris(pentafluorophenyl)boron), forms Lewis base complexes with a wide variety of alcohols, mercaptans, silanols, and oximes. These borane complexes are catalyst precursors that when combined with Group IVB organometallic compounds produce catalysts useful for polymerization of olefins, such that the polymers have high molecular weights and low polydispersities, that is a narrow molecular weight distributions.

Lewis base complexes of $(C_6F_5)_3B$ bearing at least one acidic hydrogen atom on the boron-bound heteroatom are useful for preparing catalysts. These compounds can be represented by the general formula: $(C_6F_5)_3B\cdot(YXH)q$ wherein X, Y and q are as described below and the valence of X is completed with hydrogen atoms where necessary to provide a neutral compound.

The following reaction scheme illustrates how neutral Lewis base complexes of tris(pentafluorophenyl)borane and corresponding acidic salts may be prepared. For illustration purposes, the reaction scheme depicts $(C_2H_5)_3N$ as a reactant to produce acidic salts. Without intending to be bound by theory, reaction scheme further illustrates how the neutral Lewis base complexes of tris(pentafluorophenyl)borane and the corresponding acidic salts are believed to react with Group IVB organometallic complexes to produce the catalytically active salts of this invention.

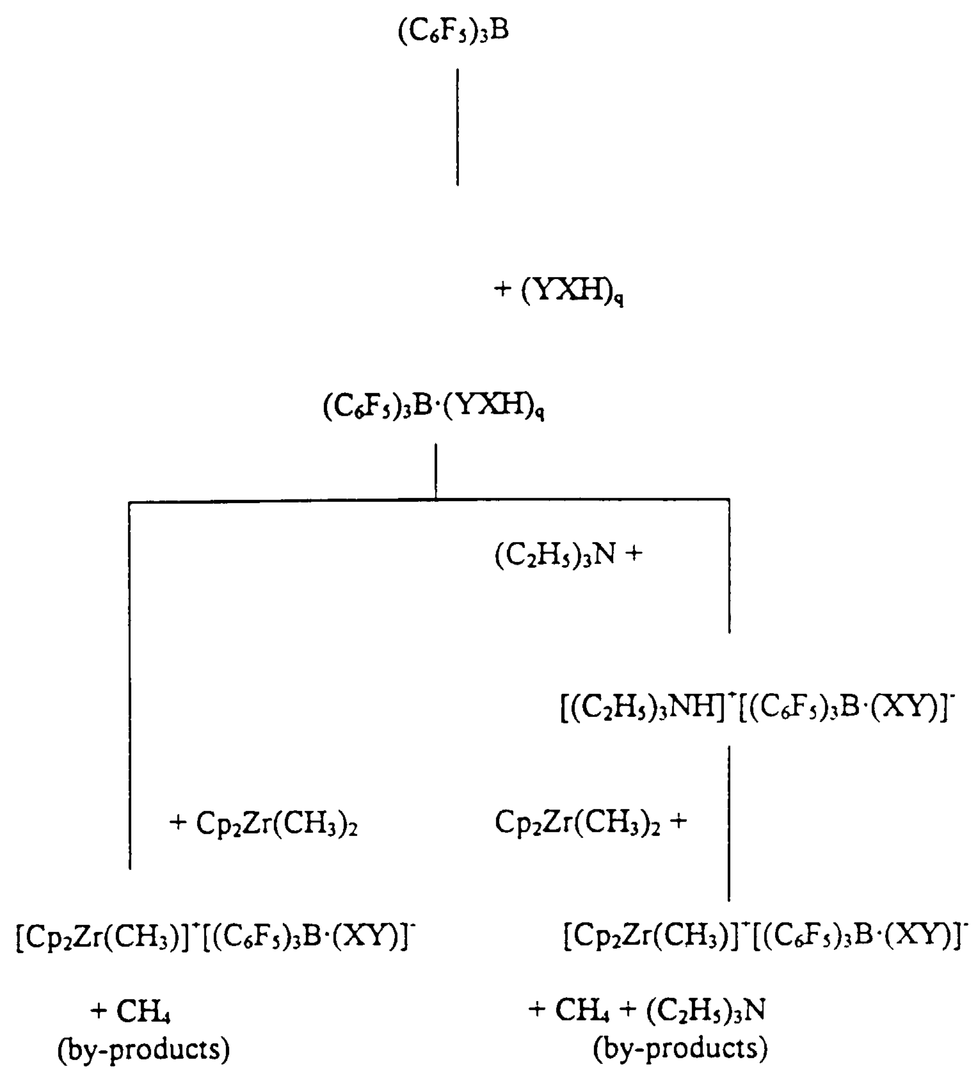


wherein Y, X, and q are as define below.

The neutral borane complexes have the general formula

$$(C_6F_5)_3B{\cdot}(YXH)_q$$

wherein X is oxygen, or sulfur;

q is 1 to 3, preferably q is 1;

Y is a hydrogen atom, $R^1$-, ($R^2$)3-Si, or $(R^3)_2C{=}N$-;

$R^1$ is a hydrocarbyl group containing 1 to 500, preferably 1 to 100 carbon atoms, and may contain a divalent oxygen and further may be a halogen-containing hydrocarbyl group, for example the $R^1$ group can be $CH_3OC_2H_4$-, t-butylcyclohexyl, isopropyl, allyl, benzyl, methyl, ethyl, $C_{18}H_{37}$, oligomeric poly-α-olefins (containing 2 to 100 monomeric units), or $CF_3CF_2(C_2F_4)_nC_2H_4$-, where n has an average value of 3.5;

$R^2$ is independently a linear or branched alkyl group containing 1 to 25 carbon atoms, or a phenyl group, further $R^2$ may contain a SiO-group, for example $(R^2)_3$ may be $(t\text{-}C_4H_9)(CH_3)_2$- or $((CH_3)_3SiO)_3$-; and

$R^3$ is independently a hydrocarbyl group containing 1 to 25 carbon atoms, further $R^3$ may be a hydrogen atom provided both $R^3$ groups selected are not hydrogen atoms, for example when X is oxygen,$(R^3)_2C{=}NOH$ forms oximes, a compound (either *cis or* trans) containing the oxime group =C=NOH, and is a condensation product of aldehydes or ketones with hydroxylamine.

Tris(pentafluorophenyl)borane tends to form complexes with alcohols having the general formula $R^1OH$. For ex-

ample, treatment of $(C_6F_5)_3B$ with methanol liquid or vapor produces the bis(solvate) $(C_6F_5)_3B{\cdot}2MeOH$. No significant amount of methanol can be removed by pumping at room temperature. This compound can be converted to $(C_6F_5)_3B{\cdot}MeOH$ by treatment with one equivalent of $(C_6F_5)_3B$. The 1:1 complex $(C_6F_5)_3B{\cdot}MeOH$ may also be prepared by reacting $(C_6F_5)_3B$ with one equivalent of methanol. Isopropanol forms a bis(solvate) as well but one equivalent of alcohol is removed under vacuum at room temperature.

Tris(pentafluorophenyl)boron complexes of less volatile alcohols can be prepared by combining one equivalent each of an alcohol and $(C_6F_5)_3B$ in a suitable, nonreactive solvent such as chloroform or toluene, followed by evaporation of the solvent. Suitable alcohols contain a wide variety of aliphatic or aromatic groups including but not limited to linear (stearyl alcohol), cyclic (t-butylcyclohexanol), branched (isopropanol), unsaturated (allyl alcohol), aromatic (benzyl alcohol), optically active (menthol), oxygen-substituted ($MeOC_2H_4OH$), oligomeric (poly-1-hexene alcohol), and halogen-substituted $[CF_3CF_2(C_2F_4)_nC_2H_4OH]$, where n has an average value of 3.5.

Suitable alcohols generally have pKa values between -2 and -4. For example, 2,2,2-trifluoroethanol and phenol do not form isorable complexes. Formation of a stable complex is readily ascertained by boron nuclear magnetic resonance ($^{11}B$ NMR) spectroscopy. The $(C_6F_5)_3B$ complexes of this invention have chemical shifts between -5 and + 15 ppm (relative to external BF3.OEt2) compared with +60 ppm for the starting material $(C_6F_5)_3B$.

Other specific examples of $(YXH)_q$ (when q is 1) include silanols $((R^2)_3SiOH)$, mercaptans ($R^1SH$), and oximes $((R_3)C{=}NOH)$. Examples of silanols include but are not limited to $(t\text{-}C_4H_9)Me_2SiOH$ and $(Me_3SiO)_3SiOH$. Higher mercaptans having low vapor pressures are preferred in catalyst applications such that the polymers produced do not have an objectionable odor. An example of a mercaptan useful in the present invention is octadecyl mercaptan. Examples of oximes include acetone oxime and cyclohexanone oxime.

Of the class of compounds of the type $(C_6F_5)_3B\text{-}(YXH)_q$, when Y is hydrogen, X is oxygen, and q is 1 or 3, the complex with water is a special case. Exposure of anhydrous $(C_6F_5)_3B$ to water vapor, produces $(C_6F_5)_3B{\cdot}3H_2O$, a white, stable solid. No intermediate hydrate was detected by infrared spectroscopic analysis. The water content was demonstrated by a single crystal X-ray structure determination. Formation of a trihydrate was unexpected because all other previously known $(C_6F_5)_3B$ complexes with Lewis bases have a 1:1 stoichiometry. Vacuum sublimation of the trihydrate produced a mixture of the monohydrate and $(C_6F_5)_3B$. The pure monohydrate, $(C_6F_5)_3B{\cdot}H_2O$, however may be obtained by combining in organic solvents, such as toluene or chloroform, one equivalent of $(C_6F_5)_3B{\cdot}3H_2O$ with two equivalents of $(C_6F_5)_3B$ followed by evaporation of the solvent. This conproportionation reaction is a convenient way of synthesizing the monohydrate as needed. Unlike $(C_6F_5)_3B{\cdot}3H_2O$, $(C_6F_5)_3B{\cdot}H_2O$ is unstable and slowly decomposes, either in solution or in the solid state, to $(C_6F_5)_2BOH$ and $C_6F_5H$. The monohydrate may also be prepared by combining one mole each of water and $(C_6F_5)_3B$.

The heteroatom-bound protons in Lewis base complexes of $(C_6F_5)_3B$, such as $(C_6F_5)_3B{\cdot}R^1OH$ and $(C_6F_5)_3B{\cdot}R^1SH$ are acidic and can be removed by treatment with bases such as primary, secondary, or tertiary amines. For example, reaction of $(C_2H_5)_3N$ with $(C_6F_5)_3B{\cdot}3H_2O$ or $(C_6F_5)_3B{\cdot}2CH_3OH$ produces the acidic salts $[(C_2H_5)_3NH]^+[(C_6F_5)_3BOH]^-$ and $[Et_3NH]^+[(C_6F_5)_3BOCH_3]^-$ respectively. Preferred bases are triethylamine, tributylamine and N,N-dimethylaniline.

Catalysts useful for polymerization of olefinic hydrocarbons may be prepared using the precursor borane complexes and hydrocarbylcyclopentadienyl metal complexes having the general formula:

$$(Cp)_pM(R^4)_{4-p} \qquad (II)$$

wherein M is titanium, zirconium or hafnium;

p is 1 or 2

Cp is a cyclopentadienyl ligand, wherein each carbon atom in the ring may be, independently, substituted with a radical selected from the group consisting of hydrocarbyl radicals, hydrocarbyl-substituted metalloid radicals wherein the metalloid is selected from Group IVA of the Periodic Table of the elements wherein the hydrocarbyl and substituted-hydrocarbyl radicals contain 1 to 20 carbon atoms and can include straight and branched alkyl groups, cyclic hydrocarbon groups, alkyl-substituted cyclic hydrocarbon groups, aromatic groups or alkyl-substituted aromatic groups; one or two pairs of adjacent hydrogen atoms of the cyclopentadienyl ligand may be substituted with one or two - $(CH)_4$ groups to form indenyl or fluorenyl radicals, respectively; further, compounds in which one or two methylene rings having the general formula $(CH_2)_n$ wherein n is 3 to 6 may be substatued for two adjacent hydrogen groups in the cyclopentadienyl ligand; further, when p is 2, the cyclopentadienyl ligands may be combined into one bidentate ligand molecule by connecting the cyclopentadienyl ligands by an organic or organometalloid group; and

$R^4$ is independently hydrogen or a hydrocarbyl or substituted-hydrocarbyl group containing from 1 to 20 carbon atoms and may be a straight or branched alkyl group, and if sufficiently large enough, a cyclic hydrocarbyl group, an

alkyl-substituted cyclohydrocarbyl group, an aromatic group, an aromaticsubstituted alkyl group (e.g., benzyl), or an alkyl-substituted aromatic group and also include trisubstituted organometalloid groups of Group IVA elements wherein each hydrocarbyl group on the metalloid contains from 1 to 20 carbon atoms.

Suitable examples of Cp include but are not limited to cyclopentadienyl, indenyl, fluorenyl, bis(octahydrofluorenyl), 1,2-bis(l-indenyl)ethane, 1,2-bis(tetrahydroindenyl)ethane, isopropyl(cyclopentadienyl-l-fluorenyl), 1,2-bis(9-fluorenyl) ethane, and 1,3-bis(9-fluorenyl)propane. Chiral metallocenes are also suitable and useful when a stereoregular polymer is desired. General structures of cyclopentadienyl, indenyl and fluorenyl ligands, respectively are represented below.

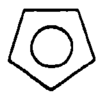
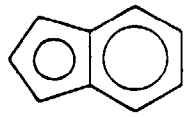
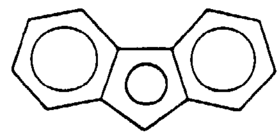

While not intending to be bound by theory, the organometallic complex, $(Cp)_pM(R^4)_{4-p}$, is believed to react with acid salts of the anions, such as $(C_6F_5)_3B{\cdot}OR^{1-}$, $(C_6F_5)_3B{\cdot}OH^-$, $(C_6F_5)_3B{\cdot}SR^{1-}$, $(C_6F_5)_3B{\cdot}OSi(R^2)_3^-$ or $(C_6F_5)_3B{\cdot}ON{=}C(R^3)_2^-$. (containing at least one acid proton in the cationic portion of the salt) to form byproducts and catalytically active salts containing $(Cp)_pM(R_4)_{3-p}^+$. For example, this can be illustrated by the following reaction with $[EtNH][(C_6F_5)_3BOH]$.

$$(Cp)_2M(CH_3)_2+[Et_3NH][(C_6F_5)_3BOH] \rightarrow [(Cp)_2MCH_3][(C_6F_5)_3BOH] + CH_4 + Et_3N$$

(Reaction Scheme I)

Alternatively, the need for an acidic salt can be by-passed in the direct reaction of the metal complexes with neutral complexes of tris(pentafluorophenyl)borane with water, alcohols, mercaptans, silanols or oximes. For example,

$$(Cp)_2M(CH_3)_2 + (C_6F_5)_3B{\cdot}MeOH \rightarrow [(Cp)_2MCH_3][(C_6F_5)_3BOMe] + CH_4$$

(Reaction Scheme II)

Materials prepared by either route can be used as catalysts for the polymerization of olefins. Importantly, catalysts prepared according to Reaction Scheme II can be obtained free of extraneous Lewis base byproduct such as triethylamine (obtained in Scheme I).

Materials described in this invention are useful for polymerization of olefins such as ethylene and propylene and in particular higher olefins, for example, 1-hexene or 1-octene. Polyolefins having high weight average molecular weights may be prepared by treating undiluted olefins with a catalytically effective amount of a catalyst of the present invention. Optionally, the polyolefins may be diluted with an inert diluent, such as toluene or hexane.

Catalysts of the present invention may be used to prepare polyolefins from olefinically unsaturated monomers having from 2 to 30, preferably 5 to 10 carbon atoms. The resulting polymers have a weight average molecular weight of 100,000 to 5,000,000, preferably 500,000 to 3,500,000 and have a polydispersity (PD) of molecular weights $\leq$ 3.5, preferably 1.5 to 3. Polymers prepared from longer chain olefins, for example, $C_nH_{2n}$ ($n \geq 5$), having high molecular weight and low polydispersity have not been previously described.

Amorphous atactic propylene homopolymers and copolymers prepared according to the present invention have weight average molecular weights in the range of from about 100,000 to about 5,000,000, preferably from about 200,000 to about 1,000,000, as determined by gel permeation chromatography (GPC). As used herein, "atactic" or "atacticity" of polypropylene (co)polymers of the present invention is defined as no observable crystallinity using Wide Angle X-Ray Scattering (WAXS) methods and no observable crystalline melting peak using Differential Scanning Calorimetry (DSC), which means the level of crystallinity in this material is presently below the limits of detection, for example, less than 1%. Furthermore, atactic polypropylene typically exhibits approximately 6% ± 3% of the (mmmm) pentad as measured using $^{13}C$ NMR (A. E. Tonelli, *NMR Interpretation of Polymer Structure,* VCH, New York (1989)). NMR results of

6% ± 3% of the (mmmm) are consistent with a completely random distribution of propylene monomer orientations.

Olefinically unsaturated monomers that may be polymerized using the catalysts of the present invention include, but are not limited to, linear- and branched $\alpha$-olefins, cyclic olefins, olefins containing an aromatic group such as phenyl, olefins containing silicon and boron, and diolefins. Mixtures of these monomers, as well as mixtures containing olefins and diolefins may be copolymerized.

Table 1

| Polyhexenes Obtained with Different Metallocenium Ion Catalysts(a) | | |
|---|---|---|
| **Initiator** | **Degree of Polymerization(b)** | **% Conversion** |
| $Cp_2ZrMe^+$ | 99 | 100 |
| $(indenyl)_2ZrMe^+$ | 200 | 70 |
| $(MesCp)_2ZrMe^+$ | 83 | 100 |
| $[(Me_3Si)_2Cp]_2HfMe^+$ | 66 | 51 |
| $(Me_5Cp)_2HfMe^+$ | 118 | 100 |
| $(Me_3SiCp)_2HfMe^+$ | 60 | 98 |
| $(Me_3SiCp)_2HfMe^+$ (c) | 56 | 90 |
| $Cp_2HfMe^+$ | 429 | 100 |
| $Cp_2HfMe^+$ (d) | 506 | 100 |
| $(indenyl)_2HfMe^+$ | 1025 | 100 |
| $(Me_3SiCH_2Cp)_2ZrMe$ | 19 | 4 |
| $(n\text{-}C_8H_{17}Cp)_2HfMe^+$ | 23 | 94 |
| $(Me_3SiCp)_2ZrMe^+$ | 10 | 55 |
| $[Me_2Si(C_5H_4)_2]ZrMe^+$ | 4 | <1 |
| $(PhCH_2SiMe_2Cp)_2ZrMe^+$ | 7 | 88 |
| $(fluorenyl)_2ZrMe^+$ | 4800 | 69 |
| $[(indenyl)_2C_2H_4)]ZrMe^+$ | 156 | 87 |
| $[(indenyl)_2C_2H_4)]HfMe^+$ | 271 | 78 |

(a) Conditions: $C_{18}H_{37}O{\cdot}B(C_6F_5)_3^-$ salts in 0.5 mL toluene, 1-hexene, monomer:catalyst 6400:1 at 0°C

(b) determined by $^1H$ NMR analysis and refers to the average number of monomer units in the polymer chain

(c) anion is $C_{18}H_{37}S{\cdot}B(C_6F_5)_3^-$

(d) anion is conjugate base of polyhexene alcohol$\cdot B(C_6F_5)_3$

Ring substitution on the Cp ligand in the catalysts of the present invention can lead to reduced polymer molecular weight and activity. This is illustrated in Table 1. Reduction of polymer molecular weight is generally undesirable in many applications since it is associated with loss of polymer cohesive strength. For example, decreases in molecular weight associated with the $Me_3Si$ group has not been described before. It is surprising because catalysts prepared from $(Me_3SiCp)_2ZrMe_2$ and methyl aluminoxane tend to produce higher molecular weight polyhexene than does unsubstituted $Cp_2ZrMe_2$.

An advantage of the present invention is the permissible introduction of solubilizing groups that enhance solubility of catalyst salts in the olefinic monomer or solution of monomer and solvent into the anion rather than the cation that contains the active catalytic site. The solubilizing groups are spatially removed from the active site, and therefore do not interfere with polymerization and thus produce polymers of high molecular weight. For example, the catalyst $[(indenyl)_2ZrMe)][(C_6F_5)_3B{\cdot}OC_{18}H_{37}]$, in which the anion contains the solubilizing octadecyl group that was introduced via of the alcohol Complex $(C_6F_5)_3B{\cdot}C_{18}H_{37}OH$, is soluble to the extent of about $10^{-3}$ M in 80:1 (v/v) 1-hexene-toluene. In an other example, polyhexene alcohol having an average degree of polymerization of 5.9 and bearing a terminal $CH_2OH$ group, yielded a solution as concentrated as $10^{-3}$ M in 40:1 hexene-hexane. For example, the structure of the solubilizing group can be varied so as to produce good catalyst solubility in a monomer of choice by suitably modifying the structure of $R^1OH$ in $(C_6F_5)_3B{\cdot}R^1OH$. As illustrated in the examples below, the anions of the present invention provide catalysts that produce higher molecular weight polyolefins than superficially related catalysts, even at equivalent monomer: catalyst ratios.

Although $(indenyl)_2ZrMe_2$ organometallic compounds are reportedly useful in the preparation of catalysts, there appears to be no correlation between the structure of the ligand(s) in the organometallic portion of the catalyst and the molecular weights of polymers of higher olefins (C5 and greater) produced with such catalysts. As a result, it is not readily apparent which organometallic compounds may be used to prepare high molecular weight polymers. For example, the soluble, homogeneous olefin polymerization catalysts described by U.S. Patent No. 4,404,344 (Kaminsky

et al.) when used to prepare poly(hexene), produces oligomers having molecular weights less than 5,000.

Structurally, flat cyclopentadienyl ligands, when incorporated into these complex salts, produce polymers of high molecular weight. As shown in Table 1 above, using $[(ligand)_2ZrMe][(C_6F_5)_3B{\cdot}OC_{18}H_{37}]$ as the catalyst and 1-hexene as the monomer, the degree of polymerization in the product polymer increased from 99 to 200 to 4800 as the ligand was changed in the order from cyclopentadienyl to indenyl to fluorenyl, respectively. The fluorenyl ligand is particularly useful when high molecular weight, rubbery polyolefins are desired.

Amorphous atactic polypropylene and its copolymers find utility as pressure-sensitive adhesives, as vibration damping materials, as elastomers or elastic materials, as impact-modifiers for thermoplastic materials, or as modifiers for asphalt and the like. Other uses include, for example packaging materials, such as cling films.

Objects and advantages of this invention are further illustrated by the following examples, but the particular materials and amounts thereof recited in these examples, as well as other conditions and details, should not be construed to unduly limit the invention.

**Examples**

All compounds were characterized by at least one of infrared (IR) and nuclear magnetic resonance (NMR) spectroscopies. NMR analysis included $^1H$, $^{11}B$, $^{13}C$, and $^{19}F$. Number average molecular weight ($M_n$) and weight average molecular weight ($M_w$) for polymers having $M_w$ less than $10^6$ were determined by gel permeation chromatography (GPC) on filtered THF (tetrahydrofuran) solutions using a Hewlett-Packard 1090-LUSI system equipped with P101, P103, P104, P105, and P106 columns from Column Resolution, Inc., San Jose, CA) using polystyrene standards or by NMR analysis as is known to those skilled in this art. Polydispersity (PD) refers to the weight-average molecular weight divided by the number average molecular weight, that is, $M_w/M_n$.

Wide angle x-ray scattering (WAXS) data were obtained employing Cu Ka radiation and Laue patterns obtained in transmission mode. Differential Scanning Calorimetry (DSC) was carried out using a Perkin Elmer System Seven instrument at a scan rate of 20°C $min^{-1}$ with nitrogen surrounding the sample.

Materials whose weight average molecular weight exceeded $10^6$ were characterized by low angle laser light scattering techniques as is known to those skilled in this art. All starting materials and solvents are commerical available or known in the literature, unless otherwise stated or apparent. All commercially available materials and solvents are available from Aldrich Chemical Co., unless otherwise noted.

Adhesive tape properties were measured for Examples 41-49 using a 180 degree peel test and a shear hang test. The peel test consisted of rolling down the tape sample onto a glass surface using two passes of a 2 kg. roller. The tape was then peeled at a 180 degree angle at a rate of 30 cm/minute. The reported values are in ounces per inch of width. The shear hang test was run at room temperature and consisted of rolling down a 2.54 cm x 2.54 cm section of the tape onto a clean glass substrate. A 1 kg. weight was then hung from the sample, and the time for the tape to detach from the glass substrate was reported. Shear at elevated temperatures can also be done. For Examples 42 and 43, the shear hang test was run at 70 °C using a 1.27 cm x 2.54 cm sample and a 500 grams hanging weight. Time to failure was reported.

**Preparation Example 1**

***Preparation of $(C_6F_5)_3B$***

Tris(pentafluorophenyl)borane was prepared by the reaction of $C_6F_5Li$ with $BCl_3$ in hexane at temperatures below -50°C according to the procedure described in Massey et al. *J. Organomet. Chem. 1964,* 2, 245.

***Example 1 - Preparation of $(C_6F_5)_3B{\cdot}3H_2O$***

A 0.87 gram quantity of $(C_6F_5)_3B$ was placed in one leg of a reactor consisting of an inverted U-tube, closed at both ends and fitted with a stopcock and O-ring joint so that the apparatus could be connected to a vacuum line. Excess water was placed in the other leg. After the water had been frozen with a low temperature bath, the apparatus was evacuated. After warming the reactor to room temperature, the borane reacted with water vapor to form the trihydrate. After water uptake was completed, excess water was pumped away to provide the air-stable product in quantitative yield.

***Example 2 - Preparation of $(C_6H_5)_3B{\cdot}H_2O$***

A mixture of 0.566 gram (1 mmol) $(C_6F_5)_3B{\cdot}3H_2O$ as prepared in Example 1 and 1.024 grams (2 mmol) $(C_6F_5)_3B$ in 10 mL dichloromethane was stirred for 15 minutes and then evaporated to dryness under vacuum. A quantitative

yield of the product remained and was stored under dry nitrogen.

***Example 3 - Preparation of [$Et_3NH$][($C_6F_5$)$_3$BOH]***

A solution of 3.6 grams $(C_6F_5)_3B{\cdot}3H_2O$ as prepared in Example 1 in 20 mL toluene was treated with 0.76 gram triethylamine in 3 mL of the same solvent. The reaction mixture was diluted with 50 mL hexane to precipitate 2.75 gram of crude product. Using Karl Fisher analysis, the crude product was determined to be a hydrate and the % $H_2O$ present was 0.66. The crude product was recrystallized by solution in a minimum amount of hot toluene, followed by cooling to -50°C. Filtration and vacuum drying yielded a material containing 0.15 % $H_2O$ (by weight), corresponding to 5 mole per cent $H_2O$.

***Example 4 - Preparation of ($C_6F_5$)$_3$B·2MeOH***

A solution of 0.34 gram of $(C_6F_5)_3B$ in 1.5 mL methanol was prepared under dry $N_2$ and evaporated to dryness to yield a clear viscous residue that crystallized under dynamic vacuum (vacuum pumping) overnight. The yield was 0.33 gram.

***Example 5 - Preparation of [$Ph_3PMe$][($C_6F_5$)$_3$BOMe]***

A solution of 0.39 gram (0.76 mmol) of $(C_6F_5)_3B$ in 1 mL methanol was treated with a slight excess (>5%) of methanolic sodium methoxide. Excess methyltriphenylphosphonium bromide was then added to the solution. The solution was diluted to the cloud point with water and then refrigerated. White crystals were collected on a filter, washed with water and vacuum dried. The yield was 0.58 grams (93%).

***Example 6***

A similar reaction to Example 5 was used to prepare the triethylammonium salt but, under these conditions, partial hydrolysis of the anion to $(C_6F_5)_3BOH^-$ occurred.

***Example 7- Preparation of ($C_6F_5$)$_3$B·$C_{18}H_{37}$OH***

A solution of 0.135 gram (0.5 mmol) of 1-octadecanol and 0.256 gram (0.5 mmol) Of$(C_6F_5)_3B$ in 4 mL toluene was stirred for 30 minutes. The solution was then evaporated on a vacuum line. The remaining product was as a viscous oil, and the yield was approximately 0.37 gram. The $(C_6F_5)_3B$ complex was prepared and handled in an atmosphere of dry nitrogen.

***Example 8 - Preparation of ($C_6H_5$)$_3$B·$C_{18}H_{37}$SH***

A solution of 0.143 gram (0.5 mmol) of 1-octadecyl mercaptan and 0.356 gram (0.5 mmol) of$(C_6F_5)_3B$ in 5 mL dichloromethane was evaporated under high vacuum. The residual product was an oil weighing 0.36 gram.

***Example 9 - Preparation of ($C_6F_5$)$_3$B·$C_4H_9OC_2H_4$OH***

A solution of 0.059 gram (0.5 mmol) of 2-butoxyethanol, dried over 4A molecular sieves and 0.256 gram (0.5 mmol) of $(C_6F_5)_3B$ in 1 mL toluene was evaporated under high vacuum. The residual product was a viscous oil and the yield was approximately 0.24 gram.

***Example 10 - Preparation of ($C_6F_5$)$_3$B·cyclo-$C_6H_{10}$=NOH***

A solution of 0.056 gram (0.5 mmol) of cyclohexanone oxime and 0.256 gram of $(C_6F_5)_3B$ in 2.5 mL dichloromethane was evaporated under high vacuum to leave 0.28 gram of product.

***Example 11 - Preparation of ($C_6F_5$)$_3$B·($Me_3SiO$)$_3$SiOH***

A solution of 0.312 gram (1 mmol) of tris(trimethylsiloxy)silanol (PCR, Inc., Gainesville, FL) and 0.512 gram (1 mmol) of $(C_6F_5)_3B$ in 1.5 mL toluene was stirred for 30 minutes and then evaporated under high vacuum. There remaining 0.8 gram of product was a white semi-solid.

***Example 12 - Fluorinated alcohol complex***

Tris(pentafluorophenyl)borane (0.51 gram, 1 mmol) and 0.44 gram (1 mmol) of $CF_3CF_2(CF_2CF_2)_nCH_2CH_2OH$ (as prepared in U.S. Patent No. 4,219,681, Example 1 and such description is incorporated herein by reference) in which the average value of n was 3.5 were combined under dry nitrogen in 2 mL of $CF_2ClCFCl_2$. After stirring the solution for approximately 1 hour, the solvent was evaporated to leave a fluorinated alcohol complex as a greasy solid.

***Example 13 - Polymerization using $(C_6F_5)_3B{\cdot}H_2O$***

***Preparation of $(C_5H_5)_2ZrMe_2$***

$(C_5H_5)_2ZrMe_2$ was prepared by treatment of $(C_5H_5)_2ZrCl_2$ in diethyl ether with two equivalents of methyllithium as described in Samuel et al. *J. Am. Chem. Soc. 1973, 9,* 6263.

1-Hexene (0.67 gram) was added under nitrogen to a catalyst prepared by combining 0.05 mmole each of $(C_6F_5)_3B{\cdot}H_2O$ prepared according to Example 2 and $(C_5H_5)_2ZrMe_2$. After a few seconds, an exothermic reaction occurred and the mixture became thick. After approximately 50 minutes, any suspended catalyst was removed by centrifugation. Unreacted monomer was then evaporated. NMR ($^1H$) analysis showed that the resultant polymer had a number average molecular weight ($M_n$) of 400. The yield of polymer was 95%.

***Example 14 - Polymerization using $(Me_5Cp)HfMe_3$***

***Preparation of $(Me_5C_5)HfMe_3$***

$(Me_5C_5)HfMe_3$ was prepared by reacting $(Me_5C_5)HfCl_3$ with 3 equivalents of methyllithium as described in Schrock et al. *J.* Am. Chem. Soc. 1988, 110, 7701.

A reaction similar to that in the Example 13 was carried out using $(Me_5C_5)HfMe_3$ instead of $(C_5H_5)_2ZrMe_2$. The yield of polymer, with an $M_n$ of 2200, was 90%.

***Example 15 - Polymerization using $[Et_3NH][(C_6F_5)_3BOH]$***

To 0.31 gram (0.5mmol) of $[Et_3NH][(C_6F_5)_3BOH]$(as prepared in Example 3) suspended in 6 mL toluene was added dropwise under dry nitrogen with stirring 0.13 gram (0.5 mmol)$(C_5H_5)_2ZrMe_2$ (as prepared in Example 13(1)) in 1 mL of the same solvent. Gas evolution occurred. The resulting orange oil that separated was removed by decantation, washed with toluene, then hexane, and vacuum dried to give 0.31 gram of catalyst as an orange foam.

This catalyst (0.01 gram) was added under dry nitrogen to 0.67 gram of 1-hexene. After 3 days, the reaction mixture was diluted with hexane and filtered to remove any undissolved catalyst. Evaporation of the hexane left 0.45 gram of polymer. Gel permeation chromatography (GPC) revealed that the product had $M_w$ = 27,700, $M_n$ = 9100 and PD = 3.04.

***Example 16 - Soluble catalyst prepared using $(C_6F_5)_3B{\cdot}C_{18}H_{37}OH$***

A solution of 0.05 mmol $C_{18}H_{37}OH$ in 0.3 mL toluene was added under dry $N_2$ to 0.05 mmol of $(C_6F_5)_3B$. Then, 0.05 mmol of $(C_5H_5)_2HfMe_2$ as prepared in Example 14 was added to the solution. Approximately, one half of the resulting catalyst solution was added with stirring to 13.4 gram dry, oxygen-free 1-hexene that had been cooled to 0°C, the monomer:catalyst ratio was 6400:1. The reaction mixture was essentially clear and transparent, that is, no suspended solids were observed. After approximately 16 hours, the polymer product was removed from the reactor by dissolution in hot heptane. After the heptane had been stripped at 95°C using a water aspirator, 13.6 grams of polymer remained having $M_w$ = 148,000, $M_n$ 55,500 and PD = 2.67.

***Examples 17(a) and 17(b)***

Reactions similar to Example 16 were carried out using the boron complex prepared according to Example 16 and

(a) $(Me_3SiC_5H_4)_2HfMe_2$ was prepared by reacting $Li[Me_3SiC_5H_4]$ and $HfCl_4$ in tetrahydrofuran followed by alkylation with methyllithium. The monomer:catalyst ratio was 6400:1. The resulting polymer had an $M_n$ of 5040 as determined by NMR analysis; and

(b) $(n\text{-}C_8H_{17}C_5H_4)_2HfMe_2$ was prepared by reacting $NaC_5H_5$ in liquid ammonia with $1\text{-}C_8H_{17}Br$ to provide $n\text{-}C_8H_{17}C_5H_5$. This was then converted by reaction with $n\text{-}C_4H_9Li$ and then $HfCl_4$ to provide $(n\text{-}C_8H_{17}C_5H_4)_2HfCl_2$.

Subsequent alkylation with methyllithium produced $(n\text{-}C_8H_{17}C_5H_4)_2HfMe_2$. The monomer:catalyst ratio was 3200. The resulting polymer had an $M_n$ of 1932 as determined by NMR analysis.

***Example 18 - Polymerization using oligomeric (polyhexene) alcohol***

A reaction like that in Example 16 was carried out using an oligomeric (polyhexene) alcohol (average degree of polymerization 5.9) instead of octadecanol. The oligomeric (polyhexene) alcohol was prepared according to the procedure described in Examples la and 1b of co-pending U.S. patent application, Serial No. 07/865,940, filed April 9, 1992 and such description is incorporated herein by reference. The yield of polymer was essentially quantitative. GPC analysis showed the polymer had $M_w$ = 164,000, $M_n$ = 63,000 and PD = 2.6.

***Example 19 - Comparative example using background art catalyst***

Hexene was catalytically polymerized using $[(C_5H_5)_2HfMe][MeB(C_6F_5)_3]$, similar to the Zr analogue described in Yang et al. *J. Am. Chem. Soc. 1991,* 113, 3623.

$Cp_2HfMe_2$ and $(C_6F_5)_3B$ (0.025 mmol each) were combined in 0.7 mL anhydrous toluene in a dry nitrogen atmosphere. Reaction occurred and a yellow oil separated. The yellow oil was dispersed by shaking and added to 13.4 grams of dry, oxygen-free 1-hexene at 0°C. Separation of a solid catalyst phase was observed. After approximately 48 hours, the resultant polymer was removed from the reactor by dissolving it in hot cyclohexane. The polymer, after removing the solvents under water aspirator vacuum weighed 13.6 grams (some residual solvent was present). GPC analysis revealed that the polymer had $M_w$ = 48,000, $M_n$ = 13,500 and PD = 3.55. The molecular weight of the polymer was lower, and the polydispersity higher than that of the material produced under similar conditions in Example 16.

***Example 20 - Polymerization using $(C_6F_5)_3B{\cdot}C_{18}H_{37}SH$***

To a solution of 0.05 mmol of the 1-octadecyl mercaptan complex of $(C_6F_5)_3B$ as prepared in Example 8 was added under nitrogen with stirring 0.024 gram (0.05 mmol) of $(Me_3SiCp)_2HfMe_2$ in 0.1 mL anhydrous toluene. This mixture was then added to 13.4 grams of dry, oxygen-free 1-hexene. After approximately 48 hours, the polymer was dissolved in heptane, and then filtered through a pad of granular alumina. After evaporation of the solvent under reduced pressure, there remained 10.2 grams of polymer having an $M_n$ of 4900 as determined by $^1H$ NMR.

***Example 21 - Polymerization using $(C_6F_5)_3B{\cdot}(MeSiO)_3SiOH$***

A toluene solution (0.3 mL) containing 0.025 mmol each $(C_6F_5)_3B{\cdot}(Me_3SiO)_3SiOH$ and $(indenyl)_2HfMe_2$ as prepared in Example 14 was added with stirring to 13.4 grams of dry, oxygen-free 1-hexene that had been cooled to 0°C. After approximately 16 hours at this temperature, the reactor was opened to air, a small amount of toluene was added and the resulting product scraped into a jar. After the volatiles were removed at 95"C/6.7 hPa (5 mm Hg), 11.3 grams of polymer remained. The polymer had an Mw = 340,000, $M_n$ = 145,000 and PD = 2.34.

***Example 22 - Polymerization using $(C_6F_5)_3B{\cdot}cyclo\text{-}C_6H_{10}{=}NOH$***

A suspension in 0.85 mL toluene of a catalyst prepared from 0.025 mmole each of the $(C_6F_5)_3B$ - cyclohexanone oxime complex as prepared in Example 10 and $(indenyl)_2HfMe_2$ was added with stirring to 13.4 grams of cold (0°C) dry, oxygen-free 1-hexene. After approximately 16 hours, the organic phase was removed and evaporated to give 1.2 grams of polymer having $M_n$ of 31,000 as determined by NMR analysis.

***Example 23 - Polymerization using $(C_6F_5)_3B{\cdot}BuOC_2H_4OH$***

In 0.3 mL anhydrous toluene were combined 0.025 mmole each of the butoxyethanol complex as prepared in Example 9 and $(indenyl)_2HfMe_2$. Then 0.67 gram of 1-hexene was added. After approximately 16 hours, the reaction mixture was evaporated to give 0.44 gram (66%) of polymeric product having $M_n$ of 18,000 as determined by NMR.

***Example 24 - Copolymerization of 1-hexene and 4-methyl-1-pentene***

This example illustrates the preparation of a co-polymer of two different olefins. A catalyst was prepared from 0.025 mmole each (indenyl)2HfMe2 and $(C_6F_5)_3B{\cdot}C_{18}H_{37}OH$ as prepared in Example 7 in 0.3 mL of dry, oxygen-free toluene. The catalyst was added with stirring to a mixture of 26.8 grams of dry, oxygen-free 1-hexene and 2.6 grams of 4methyl-1-pentene that had been cooled to 0°C. After four days, the resulting rigid reaction product was dissolved in 50 mL of

toluene and poured into 200 mL of methanol to precipitate the product. After drying in a vacuum oven, the polymer weighed 23 grams. NMR analysis disclosed that the polymer contained 5 mole % 4-methyl-1-pentene. According to GPC analysis, the polymer had $M_w$ = 207,000, $M_n$ = 62,000 and PD 3.3.

***Example 25 - Preparation of high molecular weight polyhexene***

A solution of 0.025 mmole (fluorenyl)$_2$ZrMe$_2$ (as described in Samuel et al. *J. Organomet. Chem.* 1976, *113*, 331) in 0.5 mL of anhydrous toluene was added under N2 to 0.025 mmole $(C_6F_5)_3B{\cdot}C_{18}H_{37}OH$ as prepared in Example 7 in 0.5 mL toluene. The resulting catalyst was added to 13.4 grams of 1-dry, oxygen-free 1-hexene at 0°C. The mixture was too thick to stir with a magnetic stirrer after 10 minutes. After approximately 16 hours, the reactor was opened to air and the contents dissolved in hot toluene. This solution was poured with stirring into a large excess of methanol. After drying in a vacuum oven, the precipitated polymer weighed 9.2 grams. Low angle laser light scattering demonstrated that $M_w$ was 2.15 x $10^6$. The polydispersity of the polymer was not obtainable because $M_n$ was not independently known. However, polyhexenes were made using the closely related $C_{18}H_{37}OB(C_6F_5)_3^-$ salts of (cyclopentadienyl)$_2$HfMe$^+$ and (indenyl)$_2$HfMe$^+$. The polymer polydispersities were 2.7 and 2.6 respectively. These are entries 8 and 10 shown in Table 1. Since polydispersity is essentially unaffected by introduction of one fused benzene ring onto the cyclopentadienyl ligand it is believed the polyhexene prepared according to this and Example 26, wherein the ligand bound to the metal has two fused benzene rings, has a polydispersity of about three or less.

***Example 26 - High molecular weight polyhexene***

A reaction similar to that Example 25 was carried out using less catalyst such that the monomer:catalyst ratio was 37,700:1. Workup was accomplished by scraping the product from the reactor. From 40.2 grams of 1-hexene was obtained 9.8 grams of polymer. Light scattering analysis revealed that $M_w$ was 3,390,000.

***Example 27 - Polymerization of 1-octadecene***

A solution in 0.5 mL toluene of the catalyst prepared as in Example 24 was added with stirring to 13.4 grams of 1-octadecene at 0°C. After approximately 16 hours, the crude product was slurried with warm isopropanol then dried at 160°C/40 Pa (0.3 mm Hg) to give 13.4 grams (85%) of a waxy polymer (m.p. 45°C). GPC analysis indicated the polymers had a $M_w$ = 154,000, $M_n$ = 72,000 and PD = 2.14.

***Example 28 - Copolymerization of 1-hexene and 1,13-tetradecadadiene***

This example illustrates copolymerization of an olefin and a diolefin. A solution containing 0.025 mmole of the catalyst as prepared as Example 24 was added with stirring to a cold (0°C) mixture of 26.8 (319 mmol) of 1-hexene and 0.17 grams (0.88 mmol) of 1,13-$C_{14}H_{26}$, (Shell Co., Houston, TX). After approximately 16 hours at this temperature, the insoluble, tough, rubbery polymer was removed from the reactor, cut into small pieces, and then dried at 80°C under vacuum. The yield was 25.4 grams (94%).

A similar example was run but using instead 0.85 gram of the same diene. The yield of polymer, after vacuum drying, was 25.4 grams (92%).

***Example 29 - Polymerization of ethylene***

In a nitrogen-filled drybox, a solution of 0.05 mmole of (indenyl)$_2$TiMe$_2$ as prepared according in 0.5 mL toluene was added to 0.05 mmole of $C_6F_5B{\cdot}C_{18}H_{37}OH$ in 0.5 mL of the same solvent. The flask was attached to a vacuum line, the contents frozen and the nitrogen pumped away. After thawing, ethylene was admitted until the pressure reached 80 kPa (600 mm Hg). The reactor was stirred and more ethylene was added so as to maintain the pressure at approximately 80 kPa during the exothermic polymerization. After ethylene consumption had declined, the now-solid reaction mixture was rinsed from the flask with methanol and air dried. The yield of polyethylene, identified by infrared spectroscopy, was 0.65 gram.

***Example 30 - Preparation of poly(cyclopentene)***

This example illustrates the polymerization of a cyclo-olefin. To 14.7 grams of cyclopentene that had been cooled to 0°C was added a solution in 0.4 mL of toluene of the catalyst as prepared in Example 24. The reactor was maintained at this temperature and shaken occasionally. After two days, the mixture was filtered. The solid phase, 1.4 grams, was digested with 50 mL of hot toluene to remove lower molecular weight oligomers and then filtered to provide 0.8 gram

of a white, insoluble solid. It was identified by infrared spectroscopy and X-ray powder diffraction as poly(cyclopentene).

***Example 31 - Polymerization of propylene using (fluorenyl)$_2$ZrMe$_2$***

A solution of 0.05 mmole $(C_6F_5)_3B$ and 0.05 mmole Exxal-20™ (a $C_{20}$ branched alcohol obtained from Exxon Co.) was prepared under N2 in 0.5 mL toluene and added to 0.05 mmole (fluorenyl)$_2$ZrMe$_2$ *(cf.* Example 25). The mixture was rinsed into a glass pressure vessel with 2 mL toluene and the vessel was connected to a gas handling system. With stirring, propylene was introduced at 31 kPa. An exotherm and a brisk gas uptake were observed. Propylene was added to maintain pressure at about 31 kPa. Gas uptake slowed after about one hour, and the vessel was disconnected and opened to the air. Toluene was added to reduce the viscosity of the clear, homogeneous reaction mixture, which was then passed through a 6 mm x 12 mm alumina pad to remove catalyst. Evaporation of solvent left 0.6 grams rubbery polymer having a $M_w$ = 120,000 and $M_n$ = 38,000. DSC analysis showed a $T_g$ of -3°C, and the sample showed no crystalline melting peak. Atacticity was confirmed by $^{13}$C NMR and WAXS.

***Example 32 - Polymerization of propylene using (1-methylfluorenyl)$_2$ZrMe$_2$***

A solution of 0.025 mmole d,1-(1-methylfluorenyl)$_2$ZrMe$_2$ (prepared according to Samuel et al., *supra* Example 25) in 1 mL toluene was added to 0.025 mmole $(C_6F_5)_3B \cdot C_{18}H_{37}OH$ (Example 7) under $N_2$. An additional 14 mL toluene was added, and the mixture was transferred to a glass pressure vessel connected to a gas handling system, and then cooled to 6°C with an ice bath. Propylene was introduced to the vessel with stirring at approximately 28.1 kPa. The temperature rose to 21°C, and propylene was added to maintain the pressure. When the temperature fell to 7°C, the reactor was opened and 15 mL toluene was added. Solid isotactic polypropylene was recovered by filtration (1.77 grams). Dilution of the filtrate with 50 mL heptane precipitated an additional 0.24 grams isotactic polypropylene, for a combined yield of 2.01 grams. $^{13}$C NMR analysis of the solid confirmed isotacticity (79% mmmm), GPC analysis gave $M_w$ = 350,000 and $M_n$ = 140,000, and DSC showed a melting point of 132°C.

Evaporation of the combined toluene-heptane filtrates gave 2 3 grams rubbery polypropylene, after vacuum drying. GPC analysis showed this material to have $M_w$ = 350,000 and $M_n$ = 110,000, and DSC showed a $T_g$ of -5.5°C but no crystalline melting peak. $^{13}$C NMR indicated a nearly atactic material (12% mmmm).

***Example 33 - Polymerization of propylene using (9-methylfluorenyl)$_2$ZrMe$_2$***

Propylene polymerization was carried out as described in Example 32, except that (9-methylfluorenyl)$_2$ZrMe$_2$, prepared according to Samuel et al. (see Example 25) was used as the metallocene portion of the catalyst. No insoluble isotactic polypropylene was obtained, and 0.5 grams soluble, atactic polypropylene was isolated without further characterization.

***Example 34 - Polymerization of propylene using (2-phenylfluorenyl)$_2$ZrMe$_2$***

A solution of 0.05 mmole (2-phenylfluorenyl)$_2$ZrMe$_2$, prepared by the method described in Samuel et al.(see Example 25) in 0.6 mL toluene was added to 0.05 mmole $(C_6F_5)_3B \cdot C_{18}H_{37}OH$ (Example 7) in 0.3 mL toluene. The mixture was diluted with 20 mL toluene and further mixed with 0.2 mL (octyl)$_3$Al (Ethyl Corp.), then transferred to a glass pressure vessel connected to a gas handling system and stirred and cooled to -15°C. Propylene was introduced at 38.7 kPa, and the temperature rose to -3°C, and pressure was maintained by addition of propylene. After one hour, the reaction vessel was opened to the air and the clear, homogeneous reaction mixture was treated with 0.1 grams Irganox 1010™ antioxidant (Ciba-Geigy) . Removal of solvent left 4.2 grams amorphous polymer, as shown by $^{13}$C NMR analysis (6.0% mmmm) and DSC analysis ($T_g$ = -5.5°C with no crystalline melting peak). GPC analysis gave $M_w$ = 910,000 and $M_n$ = 390,000.

***Example 35 - Copolymerization of polypropylene and 1-hexene using (fluorenyl)$_2$ZrMe$_2$***

Into a glass pressure vessel attached to a gas handling system was introduced 50 mL 1-hexene and 0.2 mL 1M triisobutylaluminum in toluene. The reactor was briefly evacuated and brought to a pressure of 3.5 kPa with propylene, and a catalyst solution prepared from 0.01 mmole each of (fluorenyl)$_2$ZrMe$_2$ and $(C_6F_5)_3B \cdot C_{18}H_{37}OH$ (Example 7) in 1 mL toluene, that was stored in a reservoir connected to the pressure vessel through a valve, was introduced into the pressure vessel with stirring. After 16 hours, the vessel was opened to the air and the contents were diluted with 50 mL toluene. The polymeric product was precipitated with approximately 150 mL methanol, taken up in toluene containing 0.05 grams Irganox 1010™, again precipitated with methanol, collected and dried in vacuum at 80°C for 12 hours to give 6.3 grams copolymer. $^{13}$C NMR analysis showed the material to contained 94% 1-hexene and 6% propylene, and GPC analysis showed $M_w$ = 920,000 and $M_n$ = 240,000. DSC analysis indicated a $T_g$ of -35°C and no crystalline melting peak at 5°C $min^{-1}$ scan rate. No crystallinity was detected by WAXS.

***Example 36 - Polymerization of Propylene***

A dry, nitrogen-purged 8 L autoclave was charged with 3 kg propylene and a solution of 3.6 gm tri-n-octylaluminum in 10 mL toluene. A catalyst solution, prepared by combining 0.06 mmole each of [1,2-bis(9-fluorenyl)ethane]zirconium dimethyl and $(C_6F_5)_3B{\cdot}C_{18}H_{37}OH$ (Example 7) in 20 mL toluene was injected. The reaction mixture was stirred for 3 hr then left to stand overnight. After venting, 1.02 kg rubbery polymer was removed from the reactor. GPC analysis showed that it had $M_w$ = 500,000, $M_n$ = 228,000 and a a polydispersity index (PD) of 2.59. Differential scanning calorimetry and X-ray diffraction revealed no crystalline phase in the sample. DSC measured the glass transition temperature as 270 Kelvin.

***Examples 37 and 38 - Copolymerization of 1-Octene and Propylene***

***Example 37***: A dry, nitrogen-purged 3 L autoclave was charged with 500 gm propylene, 100 gm 1-octene and 1.5 gm tri-n-octylaluminum. A catalyst solution, prepared by combining under nitrogen 0.03 mmole each [1,2-bis(9-fluorenyl)ethane]zirconium dimethyl and $(C_6F_5)_3B{\cdot}C_{18}H_{37}OH$ (Example 7) in 10 mL toluene, was introduced. The reactor was agitated under autogenous pressure for 16 hr then vented. The crude product was kept under vacuum for 24 hr. to remove volatiles. The yield was 300 gm. GPC analysis showed that the polymer had $M_w$ = 378,000, $M_n$ = 136,000 and a PD of 2.79. NMR spectroscopic analysis disclosed 9 mole % octene (22% by weight) and 91 mole % propylene. Differential scanning calorimetry and X-ray diffraction revealed no crystalline phase in the sample. DSC measured the glass transition temperature as 256 Kelvin.

***Example 38:*** Polymerization similar to that in Example 37 was carried out except that a mixture of 320 grams each of propylene and 1-octene was polymerized at 30°C. The yield was 21 grams. GPC analysis showed that the copolymer had $M_w$ = 728,000, $M_n$ = 355,000 and a PD of 2.05. The material contained 23 mole percent octene and 77 mole per cent propylene according to NMR spectroscopic analysis. Differential scanning calorimetry and X-ray diffraction revealed no crystalline phase in the sample. DSC measured the glass transition temperature as 246 Kelvin.

***Example 39 - Copolymerization of Propylene and Ethylene***

A mixture of 500 gm propylene and 200 gm ethylene was charged into a dry, nitrogen-purged 3 L autoclave that contained 3 gm tri-n-octylaluminum. A catalyst solution, prepared by combining 0.015 mmole each of [1,2-bis(9-fluorenyl)ethane]zirconium dimethyl and $(C_6F_5)_3B{\cdot}C_{18}H_{37}OH$ (Example 7) in 10 mL toluene, was then added to the reactor. The reactor was agitated at room temperature for 20 hr then vented. The copolymer removed from the reactor weighed 69 gm after vacuum drying. GPC analysis showed $M_w$ = 204,000, Mn = 94,000 and a PD of 2.08. NMR analysis demonstrated 35 mole per cent propylene and 65 mole per cent ethylene. Examination by differential scanning calorimetry and X-ray diffraction indicated the absence of any crystalline component. DSC measured the glass transition temperature as 223 Kelvin.

***Example 40 - Polymerization of Propylene***

Polymerization of propylene was carried out in a fashion similar to Example 36, except that an alternative catalyst/cocatalyst system was used. A dry, nitrogen-purged 8 L autoclave was charged with 3 kg propylene. A catalyst solution, prepared by dissolving 5.4 mg of [1,2-bis(9-fluorenyl)ethane]zirconium dichloride in 10 ml of methaluminoxane ([Al] = 1.7M), was injected into the reactor. The reaction mixture was stirred for 3 hr then left to stand overnight. After venting, 0.9 kg rubbery polymer was removed from the reactor. GPC analysis showed that it had $M_w$ = 494,000, $M_n$ = 210,000 and a a polydispersity index (PD) of 2.35. Differential scanning calorimetry and X-ray diffraction revealed no crystalline phase in the sample. DSC measured the glass transition temperature as 270 Kelvin.

***Examples 41 to 49 - Pressure-Sensitive Adhesives***

Nine pressure sensitive adhesives were prepared from the polymers described in Examples 36 to 40. The formulations of these pressure-sensitive adhesives are given in Table 2. The adhesive raw materials comprised a base polymer, a tackifying resin, and optionally a plasticizing oil, although one or more tackifying resins and plasticizing resins can be used in making the pressure-sensitive adhesives of this invention. The tackifying resins used in these examples include Wingtack Plus™, an aliphatic hydrocarbon resin available from Goodyear Chemical Co. that has a $T_g$ of 315 Kelvin; Escorez™ 1310LC, an aliphatic hydrocarbon resin available from Exxon Chemical Co. that has a $T_g$

of 313 Kelvin; and Zonarez A-25™, an α-pinene liquid tackifying resin available from Arizona Chemical Co. that has a $T_g$ of 251 Kelvin. The plasticizing oil used was Shellflex 371™, a naphthenic oil available from Shell Oil Co that has an effective $T_g$ of 209 Kelvin. Other tackifying resins and plasticizing oils may be used provided that they are compatible with the base polymer. The raw materials were dissolved in a 50/50 blend of toluene and heptane according to the formulations given in Table 2. The toluene/heptane blend comprised 65% of the weight of the adhesive solution. The solutions were subsequently coated onto a 40 micrometer thick biaxially- oriented polypropylene film and dried at 65 °C for 10 minutes, resulting in tape samples with an adhesive thickness between 25 and 40 micrometers, except for Example 45, which was coated at 70 micrometers.

Table 2

| **Examples 41-49 PSA Compositions** | | | | | | | |
|---|---|---|---|---|---|---|---|
| **Example** | **Tg Kelvin** | **Polymer Type** | **Percent Polymer** | **Percent Shellflex™ 371** | **Percent Wingtack™ Plus** | **Percent Escorez™ 1310LC** | **Percent Zonarez™ A-25** |
| 41 | 260 | Ex. 36 | 40 | 28.6 | 31.4 | --- | --- |
| 42 | 255 | Ex. 36 | 55 | 28.3 | 16.7 | --- | --- |
| 43 | 255 | Ex. 36 | 55 | 28.3 | 16.7 | --- | --- |
| 44 | 260 | Ex. 37 | 40 | 23.5 | 36.5 | --- | --- |
| 45 | 282 or 269 | Ex. 38 | 40 | -- | --- | 60 | -- |
| 46 | 255 | Ex. 39 | 55 | 1.6 | 43.4 | -- | --- |
| 47 | 260 | Ex. 40 | 40 | 28.6 | 31.4 | --- | --- |
| 48 | 255 | Ex. 40 | 55 | 28.3 | 16.7 | --- | --- |
| 49 | 260 | Ex. 36 | 50 | --- | --- | --- | 50 |

The $T_g$ values given in Table 2 are the calculated glass transition temperatures of the adhesives. These values are arrived at using the Fox equation and the $T_g$'s of the indivdual components. This formulation methodology is well described in the block copolymer PSA art, for example as described in U.S. Patent No. 5,019,071 or U.S. 5,300,057 to Miller et al. The range of useful elastomer content in the PSA's of this invention range from about 20% to 100%, while the useful range of calculated glass transition temperature values ranges from about 200 Kelvin to about 275 Kelvin, depending on the application for the PSA. In general, higher Tg adhesives give tapes that have higher adhesion, while lower Tg adhesives give lower adhesion. The tape samples of Examples 41 to 49 were tested for peel and shear performance as previously described. In addition, Examples 42 and 43 were tested for high-temperature shear resistance. Adhesion data for these examples are summarized in Table 3.

Table 3

| **Adhesion Results for Examples 42-51** | | | | |
|---|---|---|---|---|
| **Example** | **PSA Thickness (microns)** | **180° Peel on Glass, oz./in.** | **Shear Hang Time, minutes** | **Elevated Temperature Shear, minutes** |
| 41 | 40 | 40.3 | 4050 | --- |
| 42 | 25 | 13.1 | 5000+ | 37 |
| 43 | 25 | 18.5 | 5000+ | 61 |
| 44 | 30 | 87.1 | 63.5 | --- |
| 45 | 70 | **>125*** | **2/21/95** | --- |
| 46 | 30 | 77.1 | 3350 | --- |

* The failure mode for Example 45 was between the adhesive and the backing, instead of between the adhesive and the glass substrate. The + sign denotes the samples were cut down after the noted time interval, that is, the samples did not fail at that time.

Table 3 (continued)

| Adhesion Results for Examples 42-51 | | | | |
|---|---|---|---|---|
| Example | PSA Thickness (microns) | 180° Peel on Glass, oz./in. | Shear Hang Time, minutes | Elevated Temperature Shear, minutes |
| 47 | 40 | 41.7 | 3700+ | --- |
| 48 | 25 | 11.1 | 5000+ | --- |
| 49 | 25 | 33.4 | 5000+ | --- |

The pressure-sensitive adhesives (PSA's) of Examples 41-49 demonstrate surprisingly good adhesion properties. High molecular weight homopolymers and copolymers of propylene have not previously been known to be suitable for use in pressure-sensitive adhesives as the main polymeric component. Examples 41 and 42 illustrate the typical properties for PSA's based on an atactic polypropylene homopolymer prepared as described in Example 36. Example 43 was prepared in the same fashion as Example 42, except that 0.25% by weight of a crosslinking material, 2-(3,4-dimethoxyphenyl)4,6-bis(trichloromethyl)-1,3,5-triazine, was added. After the pressure-sensitive adhesive was coating onto the tape backing, the adhesive was exposed to 350 mJ of UV radiation centered on a 330 nm wavelength in order to crosslink the polypropylene chains.

As can be seen from the high temperature shear data in Table 3, using the crosslinking agent increased the shear resistance of the adhesive. Examples 45-47 illustrated the ability to make good pressure-sensitive adhesives from copolymers of propylene with other monomers. The adhesion properties can thus be manipulated by selection of the comonomer types and ratios, as well as by manipulation of the the variables of $T_g$ and percent elastomer as previously described. Examples 47 and 48 were prepared in an indentical fashion as Examples 41 and 42, except that the atactic polypropylene homopolymer was prepared using an alternative cocatalyst, methaluminoxane, as described in Example 40. As can be seen from Table 3, the adhesion properties of PSA's made with the two atactic, high molecular weight polypropylene homopolymers made with the different cocatalysts were essentially identical. Example 49 illustrated the use of an alternative tackifying resin system. Adhesion properties for Example 49 were also very good.

***Example 50 - Cling Film***

To prepare a cling film, which can find use as a packaging film, 5 grams of the polymer from Example 36 were dissolved in a 10 grams of a 50/50 solution of toluene and heptane. The resulting solution was coated at a thickness of 25 micrometers on a 40 micrometer thick biaxially-oriented polypropylene film. The solution was dried by placing the film and solution in a forced air oven at 65 °C for 10 minutes. The resulting material had a large difference in the perceived coefficient of friction on the two different sides of the material. The side consisting of the biaxially-oriented polypropylene film had a low coefficient of friction, while the opposite side, consisting of the high molecular weight atactic polypropylene, had by comparison a high coefficient of friction. Further, this second side also had a significant tendency to cling to smooth surfaces, such as the opposite side of the material. Such films have application in the packaging industry as cling films and pallet wrapping films.

Various modifications and alterations of this invention will become apparent to those skilled in the art without departing from the scope and spirit of this invention, and it should be understood that this invention is not to be unduly limited to the illustrative embodiments set forth herein.

**Claims**

**1.** A rubbery amorphous atactic polypropylene polymer wherein the rubbery amorphous polypropylene polymer is a polymerization product using a bis(fluorenyl) zirconocene catalyst (claim 11 and 20) and wherein the rubbery amorphous polypropylene has a weight-average molecular weight of 100,000 to 3,000,000 and a polydispersity of less than or equal to 3.5.

**2.** A rubbery amorphous poly (propylene-co-ethylene) copolymer having a weight-average molecular weight of 100,000 to 3,000,000 and a polydispersity of less than or equal to 3.5, said copolymer comprising 5 to 50% by weight of ethylene, wherein the propylene units in the copolymer are atactic.

**3.** A pressure-sensitive adhesive comprising rubbery amorphous atactic polypropylene, further comprising one or

more tackifying resins and oils.

**4.** A pressure-sensitive adhesive comprising the copolymer of claim 2 further comprising one or more tackifying resins and oils.

**5.** A copolymer of propylene and a higher α-olefin monomer, wherein the α-olefin monomer has $C_4$-$C_{18}$ carbon atoms, and the copolymer has a weight-average molecular weight of 100,000 to 3,000,000 and a polydispersity of less than or equal to 3.5, and further the copolymer comprises 5 to 95% by weight of higher α-olefin, wherein the propylene units in the copolymer is atactic.

**6.** A pressure-sensitive adhesive comprising the copolymer of claim 5, further comprising one or more tackifying resins and oils.

**7.** A copolymer of ethylene and a higher α-olefin monomer, wherein the α-olefin monomer has $C_4$-$C_{18}$ carbon atoms, and the copolymer has a weight-average molecular weight of 100,000 to 3,000,000 and a polydispersity of less than or equal to 3.5, and further the copolymer comprises 75 to 95% by weight of higher α-olefin, the copolymer being essentially amorphous.

**8.** A pressure-sensitive adhesive comprising the copolymer of claim 7, further comprising one or more tackifying resins and oils.

**9.** A terpolymers of ethylene, propylene and a higher α-olefin monomer wherein the α-olefin monomer has $C_4$-$C_{18}$ carbon atoms, and the copolymer has a weight-average molecular weight of 100,000 to 3,000,000 and a polydispersity of less than or equal to 3.5, and further the copolymer comprises 75 to 95% by weight of higher α-olefin, the copolymer being essentially amorphous.

**10.** A pressure-sensitive adhesive comprising the copolymer of claim 9, further comprising one or more tackifying resins and oils.

tackified PSAs - homo- and copolymers (page 34, lines 3-7)
tapes made from the PSAs
conformable films, esp. as blends of RAPP and PE and/or PP packaging or cling films